# NEW EUROPEAN PATENT SPECIFICATION

(11) **EP 2 947 117 B2**
(45) Date of publication and mention of the opposition decision: **26.10.2022**
(45) Mention of the grant of the patent: 11.07.2018
(21) Application number: 14168906.7
(22) Date of filing: 19.05.2014
(51) Int. Cl.: G01N 21/77, G01N 21/64, C08J 5/04

(54) **Analytical binder for mineral wool products**
Analytisches Bindemittel für Mineralwollprodukte
Liant analytique pour produits de laine minérale

(43) Date of publication of application: 25.11.2015
(73) Proprietor: Rockwool International A/S, 2640 Hedehusene (DK)
(72) Inventor: Hjelmgaard, Thomas, 3480 Fredensborg (DK)
(74) Representative: Letzelter, Felix Phillip

(56) References cited:
- EP-A1- 1 688 456
- EP-A1- 2 884 259
- WO-A2-2012/071304
- US-A- 4 943 612
- US-A- 5 100 802
- US-A1- 2003 065 069
- US-A1- 2003 224 527
- US-A1- 2004 149 026
- Paula Bosch ET AL: "New Fluorescent Probes for Monitoring Polymerization Reactions: Photocuring of Acrylic Adhesives, 2", MACROMOLECULAR CHEMISTRY AND PHYSICS., vol. 203, no. 2, 1 January 2002 (2002-01-01), pages 336-345, XP055358264, DE ISSN: 1022-1352, DOI: 10.1002/1521-3935(20020101)203:2<336::AID- MACP336>3.0.CO;2-B
- Bernd Strehmel ET AL: "New Intramolecular Fluorescence Probes That Monitor Photoinduced Radical and Cationic Cross-Linking", Macromolecules, vol. 32, no. 22, 1 November 1999 (1999-11-01), pages 7476-7482, XP055358296, US ISSN: 0024-9297, DOI: 10.1021/ma990773b
- Paula Bosch ET AL: "Fluorescent Probes for Sensing Processes in Polymers", CHEMISTRY - A EUROPEAN JOURNAL, vol. 11, no. 15, 5 April 2005 (2005-04-05) , pages 4314-4325, XP055358305, ISSN: 0947-6539, DOI: 10.1002/chem.200401349
- VATANPARAST, R. et al.: "Thermal Cure Monitoring of Phenolic Resole Resins Based on In Situ Fluorescence Technique", J Appl Polym Sci, vol. 83, 2002, pages 1773-1780,

## Description

### Field of the Invention

The present invention relates to an aqueous binder composition for use in the production of man-made vitreous fibres (MMVF) which allows the detection of the distribution of uncured binder in a MMVF web and/or MMVF product. The present invention also relates to a MMVF product made with the binder and to a method for detecting the distribution of uncured binder on and/or in a MMVF web and/or a MMVF product.

### Background of the Invention

Mineral fibre products generally comprise man-made vitreous fibres (MMVF) such as, e.g. glass fibres, basalt fibres, slag wool and stone wool, which are bonded together by a cured thermoset polymeric binder material. These products are also often referred to as mineral wool products. For use as thermal or acoustical insulation products, bonded mineral fibre (MMVF) mats are generally produced by converting a melt made of suitable raw materials to fibres in conventional manner, for instance by a spinning cup process or by a cascade rotor process. The fibres are blown into a forming chamber and, while airborne and while still hot, are sprayed with a binder solution and randomly deposited as a mat or web onto a travelling conveyor. The fibre mat is then transferred to a curing oven where heated air is blown through the mat to cure the binder and rigidly bond the mineral fibres together.

One problem frequently encountered in the production of such mineral fibre products is an insufficient curing of the binder. Insufficient curing can for example occur in case there is an inhomogeneous binder distribution resulting in a high local concentration of binder which cannot be cured during the passage in the curing oven (5-10 minutes).

This phenomenon is termed "wet spots". Wet spots may result in poor performance of the installed product. The wet spot may diffuse into other surrounding building material, for example the mortar of external insulation and an un-aesthetical spot may be seen on the outer wall because of the wet spot.

Insufficient curing may also occur throughout the whole product. This may be the case where the production line has a production change from one product type to another and where the curing settings needs to be changed. For example, changing from a low binder content product to a high binder content product, or vice versa. During the run-in of the line, the curing settings may not be optimal and insufficient curing occurs.

Another problem that can occur during the production of mineral fibre products are anomalies of the binder distribution like the agglomeration of large amounts of binder in a single part of the mineral fibre product (called "chewing gums").

Accordingly, there is a need for a curable binder composition that allows the rapid detection of curing and/or the local distribution of curing of said binder, and/or of anomalies of the binder in the MMVF product. Previously known curable binder compositions required the thorough inspection of the MMVF product in combination with reagents which chemically react with one or more of the components of the binder in order to allow a detection. Accordingly, this detection requires the use of harmful chemicals and is therefore not convenient for a quick and efficient quality control of a MMVF product.

In view of the foregoing, it would be a significant advancement in the art to provide a curable binder composition for use in the production of MMVF products that allows a rapid and secure detection of the curing status in a MMVF product. It would be a further advancement in the art to provide a method for detecting the distribution of uncured binder on and/or in a MMVF web and/or a MMVF product that can be used without the need for harmful chemicals and without the necessity to destroy the tested MMVF product.

### Summary of the Invention

It was an object of the present invention to provide a curable binder composition that allows the detection of curing and/or the local distribution of curing and/or of anomalies of the curing of the binder in a MMVF product which allows a quick and efficient detection and does not require the destruction of the tested product.

A further object of the present invention was to provide a method for the detection and distribution of uncured binder on and/or in an MMVF web and/or a MMVF product which allows the monitoring of the distribution of uncured binder in these products.

In accordance with a first aspect of the invention, there is provided an aqueous curable binder composition for use in the production of man-made vitreous fibres (MMVF) comprising one or more fluorescent dye(s) being non-fluorescent after curing of the binder, wherein the binder composition comprises fluorescein sodium salt in a concentration of 0.05 to 0.4 wt.-%, based on the dry weight of the aqueous binder composition.

In accordance with a second aspect of the present invention, there is provided a MMVF product made with the binder according to the present invention.

In accordance with a third aspect of the present invention, there is provided a method for detecting the distribution of uncured binder on and/or in a MMVF web and/or a MMVF product, wherein the method comprises the steps:
(a) preparing a MMVF web by applying an aqueous binder composition according to any of the claims 1 to 5 to man-made vitreous fibres,
(b) curing the MMVF web to form a MMVF product
(c) a detection step including one or more of
   - detecting the emission of fluorescence
   - detecting the pattern of fluorescence
   - detecting the absence of fluorescence
   - detecting a color change
on one or more surfaces of the MMVF product after curing and/or
on one or more surfaces of the MMVF web before curing.

### Description of the Preferred Embodiments

The present inventors have surprisingly found that by providing an aqueous curable binder composition comprising a fluorescent dye, the curing of the binder on the MMVF product can be detected because the fluorescence of the binder material is influenced by the curing. Without wanting to be bound by any specific theory, it is assumed that the mechanism for the cease of fluorescence might, for example, be due to a decomposition of the dye or an incorporation of the dye into the curing binder.

For the purpose of the present invention, the term "cured or partly cured binder" refers to a binder which has at least been cured to a certain degree, e.g. by thermally treating in a curing apparatus, but has not necessarily been treated to achieve full curing in all regions of the product. Accordingly, the term "cured or partly cured binder" for the purpose of the present invention includes binders containing cured and uncured regions.

The aqueous binder composition according to the present invention allows for a surprisingly easy detection of the distribution of uncured binder by merely observing the presence or absence and/or the pattern of fluorescence on the surface of the MMVF product and/or detecting a color change on the surface of the MMVF product, e.g. by visual inspection. The distribution of uncured binder in or on the product can be detected within a wide time range after the production of the MMVF product and it is possible to detect the distribution of uncured binder on a MMVF product freshly made and just leaving the curing oven after cooling. Irregularities in the curing or anomalies of the binder like "chewing gums" can therefore immediately be detected and the production process can therefore be re-adjusted quickly, thereby minimizing the wastage of inadequate products. As a further advantage, the aqueous binder compositions according to the present invention allow such a detection in a non-destructive way.

### Fluorescent Dye

The present inventors surprisingly found that by including a fluorescent dye being non-fluorescent after curing to the aqueous curable binder composition, a very effective monitoring of the production process of a MMVF product becomes possible.

The fluorescent dye is used in a concentration of 0.05 to 0.4 wt.-%, based on the dry weight of the aqueous binder composition.

### Detection of Irregularities in the Cured Mineral Fibre Product

Curing oven surface: Areas with uncured regions give green fluorescent irregularities in the curing oven pattern.

Split surface: When using the binder according to the present invention comprising fluorescein Na salt and using UV illumination, the area surrounding wet spots will appear black, while the wet spots uncured areas and their saw-traces from the splitting process will fluoresce brightly green.

### Detection of Regions with Uncured Binder in Mineral Fibre Products

Insufficient curing of the binder throughout the mineral fibre web will result in a higher emission of fluorescence throughout the web. This can be visually detected, optionally by comparing the emission of fluorescence with the emission of fluorescence of a correctly cured web. Alternatively, the emission of fluorescence can also be measured by an appropriate detector.

### Detection of Anomalies of the Cured Binder on the Mineral Fibre Product

Agglomeration of large amounts of binder in a single part of the mineral fibre product ("chewing gums") can be detected since they will fluoresce.

The detection of such agglomerations of large amounts of binder in the MMVF product is possible when the MMVF product is produced with the aqueous curable binder composition according to the present invention, presumably because such anomalies have a wet, uncured inner region and are therefore detectable.

### Binder

While there is in principal no limitation to the type of curable binder composition for use in the production of MMVF to be transferred into a binder according to the present invention by the addition of a fluorescent dye being non-fluorescent after curing of the binder, particularly good results have been achieved with the following binder compositions:

### PF-resols

Very good results have been achieved for mineral fibre products bonded together by a cured thermoset binder, wherein the binder applied in the production of the mineral fibre product, in its non-cured state, comprises a conventionally used phenol-formaldehyde or phenol-urea-formaldehyde (PUF) based resol and optionally a sugar component.

For these binders, without sugar component, reference is for example made to EP 0148050 and EP 0996653. For these binders, with sugar component, reference is made to WO 2012/076462.

### Binders based on alkanolamine-polycarboxylic acid anhydride reaction products

Very good results have also been achieved for mineral fibre products bonded together by a cured thermoset binder, wherein the binder applied in the production of the mineral fibre product, in its non-cured state, comprises (1) a water-soluble binder component obtainable by reacting at least one alkanolamine with at least one polycarboxylic acid or anhydride and, optionally, treating the reaction product with a base; (2) a sugar component; and optionally (3) urea.

For these binders, reference is for example made to WO 2012/010694 and WO 2013/014076.

### Other binders

Very good results have also been achieved for mineral fibre products bonded together by a cured thermoset binder, wherein the binder applied in the production of the mineral fibre product, in its non-cured state, comprises
(a) a sugar component, and one or both of
(b) a polycarboxylic acid component, and
(c) a component selected from the group of amine compounds, ammonia, ammonium salts of a polycarboxylic acids.

Examples of these binders are described in WO 2007/014236, WO 2011/138458 and WO 2009/080938.

For all the binders described above, the polycarboxylic acid component, if present, is preferably selected from dicarboxylic, tricarboxylic, such as citric acid, tetracarboxylic, pentacarboxylic, and like polycarboxylic acids, and anhydrides, salts and combinations thereof.

For all the binders described above, the alkanolamine component, if present, is preferably selected from one or more of monoethanolamine, diethanolamine, triethanolamine, diisopropanolamine, triisopropanolamine, methyldiethanolamine, ethyldiethanolamine, n-butyldiethanolamine, methyldiisopropanolamine, ethylisopropanolamine, ethyldiisolpropanolamine, 3-amino-1,2-propanediol, 2-amino-1,3-propanediol, aminoethylethanolamine, and tris-(hydroxymethyl)-aminomethane.

For all the binders described above, the sugar component, if present, is preferably selected from sucrose, reducing sugars, in particular dextrose, polycarbohydrates, and mixtures thereof, preferably dextrins and maltodextrins; more preferably glucose syrups, and more preferably glucose syrups with a Dextrose Equivalent value of DE = 60-99.

Other binders may be aqueous binders comprising a reaction product of an amine component and a carbohydrate component.

### Mineral Fibre Product

The mineral fibres employed may be any of man-made vitreous fibres (MMVF). In a preferred embodiment, the mineral fibre product comprises man-made vitreous fibres selected from stone wool, mineral wool, slag wool, basalt fibres, and glass fibres. These fibres may be present as a wool product, e.g. like a stone wool product.

Suitable fibre formation methods and subsequent production steps for manufacturing the mineral fibre product are those conventional in the art. Generally, the binder is sprayed immediately after fiberizing of the mineral melt on to the airborne mineral fibres. The aqueous binder composition is normally applied in an amount of 0.1 to 10 %, preferably 0.2 to 8 % by weight, of the bonded mineral fibre product on a dry basis.

For the purpose of the present application, the term MMVF web is to be understood as man-made vitreous fibres to which a binder composition has been applied. The binder on the MMVF web can be non-cured or cured.

The binder applied mineral fibre web is generally cured in a curing oven by means of a hot air stream. The hot air stream may be introduced into the mineral fibre web from below, or above or any combination of above or below in distinctive zones in the length direction of the curing oven.

Typically, the curing oven is operated at a temperature of from about 150°C to about 350°C. Preferably, the curing temperature ranges from about 200 to about 300°C. Generally, the curing oven residence time is from 30 seconds to 20 minutes, depending on, for instance, the product density.

If desired, the MMVF web may be subjected to a shaping process before curing. The bonded mineral fibre product emerging from the curing oven may be cut to a desired format e.g., in the form of a batt. Thus, the mineral fibre products produced, for instance, have the form of woven and nonwoven fabrics, mats, batts, slabs, sheets, plates, strips, rolls, granulates and other shaped articles which find use for example, as thermal or acoustical insulation materials, vibration damping, construction materials, facade insulation, reinforcing materials for roofing or flooring applications, as filter stock, as horticultural growing media and in other applications.

For the purpose of the present application, the term MMVF product is to be understood as man-made vitreous fibres bonded together by a binder composition which has subsequently undergone a curing process.

In other words, the general term MMVF web comprises man-made vitreous fibres with a binder in either the non-cured or cured state whereas the specific term MMVF product describes the finished product in which the binder on the man-made vitreous fibres has undergone a curing process.

### Process for Detecting the Distribution of Uncured Binder

The present inventors have surprisingly found that the aqueous binder compositions according to the present invention cannot only be used for detecting uncured binder on one or more surfaces of the finished MMVF product after curing but also for detecting the distribution of uncured binder on the MMVF web before the curing process.

Accordingly, the present invention is also directed to a method for detecting the distribution of uncured binder an and/or in a MMVF web and/or a MMVF product, wherein the method comprises the steps:
(a) preparing a MMVF web by applying an aqueous binder composition according to any of the claims 1 to 5 to man-made vitreous fibres,
(b) curing the MMVF web to form a MMVF product
(c) a detection step including one or more of
   - detecting the emission of fluorescence
   - detecting the pattern of fluorescence
   - detecting the absence of fluorescence
   - detecting a color change
an one or more surfaces of the MMVF product after curing and/or
an one or more surfaces of the MMVF web before curing.

By employing the aqueous binder compositions according to the present invention, the method according to the present invention allows a strongly improved control of the production process of a MMVF product. After the aqueous binder composition has been applied to the man-made vitreous fibres to produce a MMVF web, the distribution of the binder on the MMVF web can be quickly and effectively monitored and if an irregularity of the distribution is monitored, the process of applying the aqueous binder composition to the man-made vitreous fibres can be adjusted accordingly. This leads to important economic advantages by allowing to immediately recalibrate the production process and thereby minimizing the amount of wastage.

After the curing process, the use of the binder according to the present invention then allows to detect the cured binder and/or any irregularities of the curing process in the finished MMVF product. Again, the detection can be made immediately after the MMVF product leaves the curing oven and therefore in case of insufficient curing or irregularities of the curing, the production process can be recalibrated very quickly in order to minimize the amount of wastage.

### Means of detection

A particular advantage of the aqueous binder composition according to the present invention is that by a simple modification of well-known aqueous binder compositions for MMVF products, the production process of MMVF products can be monitored by a simple detection step which does not require any sophisticated equipment.

A particular advantage of the method according to the present invention is that it can be integrated in a production process for mineral fibre products without delaying the process.

A further advantage of the method according to the present invention is that the results can be obtained by simple visual inspection of the mineral fibre product immediately after bringing it into contact with the reagent. This visual inspection can take place without the help of special light conditions.

The contrast of the fluorescence can be strongly enhanced by performing the step of detection under the use of UV light. In a preferred embodiment, the step of detecting the pattern of fluorescence on one or more surfaces of the mineral fibre product therefore takes place under illumination with a UV light. Particularly good results are achieved by the use of a 365 nm UV light, i.e. a UV light that shows a strong emission in the range of 365 nm.

A further advantage of the method according to the present invention is that it can easily be carried out in an automated form. Such an automated form of the method can be implemented by using an automated processing of the detection signal obtained from a detector and an appropriate feedback system.

### Examples

### Binder: PUF-sugar

This binder is a PUF-resol with sugar.

A phenol-formaldehyde resin is prepared by reacting 37% aq. formaldehyde (606 g) and phenol (189 g) in the presence of 46% aq. potassium hydroxide (25.5 g) at a reaction temperature of 84°C. The reaction is continued until the acid tolerance of the resin is 4 and most of the phenol is converted. Urea (241 g) is then added.

Using the urea-modified phenol-formaldehyde resin obtained, a binder is made by addition of 25% aq. ammonia (90 mL) and ammonium sulphate (13.2 g) followed by water (1.80 kg), dextrose syrup with a DE value of 90-95 (Cargill) (370 g), and 40% aq. silane (Momentive VS-142) (3.1 g).

### Binder: B1-urea-sugar

This binder is based on alkanolamine-polycarboxylic acid anhydride reaction products.

Diethanolamine (DEA, 157 g) is placed in a 5-litre glass reactor provided with a stirrer and a heating/cooling jacket. The temperature of the diethanolamine is raised to 60 °C where after tetrahydrophthalic anhydride (THPA, 87 g) is added. After raising the temperature and keeping it at 130 °C, a second portion of tetrahydrophthalic anhydride (44 g) is added followed by trimellitic anhydride (TMA, 87 g). After reacting at 130 °C for 1 hour, the mixture is cooled to 95 °C. Water (315 g) is added and stirring is continued for 1 hour. Urea (281 g) is then added and stirring is continued until all solids are dissolved. After cooling to ambient temperature, the mixture is poured into water (3.66 kg) and 50% aq. hypophosphorous acid (6 g) and 25% aq. ammonia (55 g) are added under stirring. Dextrose syrup with a DE value of 90-95 (Cargill) (1.54 kg) heated to 60 °C is then added under stirring followed by 50% aq. silane (Momentive VS-142) (6.2 g).

### Binder dry matter measurements

Disc-shaped stone wool samples (diameter: 5 cm; height 1 cm) were cut out of stone wool and heat-treated at 580 °C for at least 30 minutes to remove all organics. The binder dry matter of a given binder solution was measured by distributing the binder solution (approx. 2-2.5 g) onto two of the heat treated stone wool discs which were weighed before and after application of the binder solution. The binder loaded stone wool discs were then heated at 200 °C for 1 hour. After cooling and storing at room temperature for 10 minutes, the samples were weighed and the binder dry matter was calculated as an average of the two results. A binder with a desired dry matter could then be produced by diluting with the required amount of water.

### Example 1: Detection of uncured binder and uncured binder distribution using aqueous curable binder compositions with 0.2% fluorescent dye (of binder dry matter) which turns non-UV active after curing of the binder

To a 1% dry weight B1-urea-sugar binder (250 mL) produced as described above was added a fluorescent dye corresponding to 0.2% of the binder dry matter (5 mg). The mixture was stirred until homogeneous. Binder mixtures containing all the fluorescent dyes listed in the table below were made in an analogous manner. Only the embodiments containing fluorescein sodium salt are in accordance with the invention.

Cut and weighed glass Whatman^{™} glass microfiber filters (GF/B, 150 mm Ø, cat. no. 1821 150) (1×3 cm) were submerged into each binder mixture for 10 seconds. The resulting binder-soaked filters were then dried in a "sandwich" consisting of (1) a 0.60 kg 8x8x1 cm plate, (2) four layers of standard filter papers, (3) the binder soaked glass microfiber filters, (4) four layers of standard filter papers, (5) a 0.60 kg 8x8x1 cm plate for 2x2 minutes by applying a weight of 3.21 kg on top of the "sandwich". In a typical experiment, the cut Whatman^{™} glass microfiber filters would weigh 0.048 g before application of the binder and 0.180 g after application and drying which corresponds to a binder dry weight on a cured filter of 2.7%.

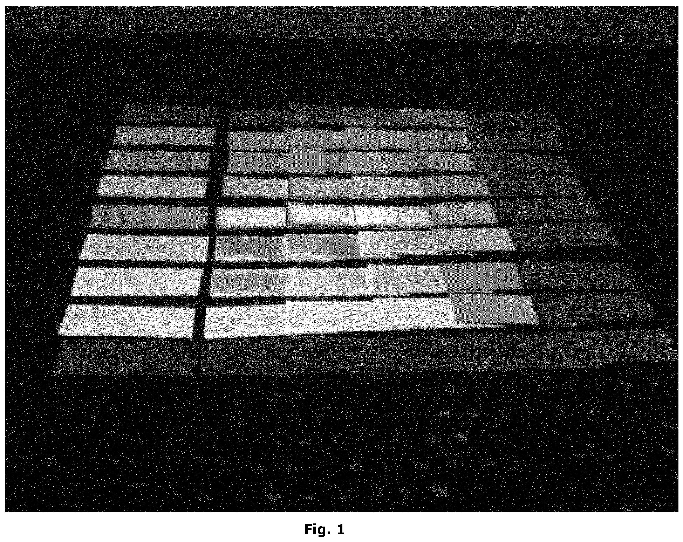

The produced glass microfiber filters loaded with binders were then treated at different temperatures and observed under daylight as well as under 365 nm UV light and compared to a 1% dry weight B1-urea-sugar mixture without added fluorescent dye (see Figs. 1-6).
Fig. 1 shows glass microfiber filters loaded with binders, observed under 365 nm UV light. Columns, from left to right: (1) room temperature (no heat treatment), (2) 80 °C/10 min, (3) 105 °C/10 min, (4) 120 °C/10 min, (5) 140 °C/10 min, (6) 160 °C/10 min. Rows, from top to bottom: (1) no dye added, (2) Rhodamine 101 inner salt, (3) Sulforhodamine B, (4) Rhodamine B, (5) Rhodamine 6G, (6) 2',7'-dichlorofluorescein, (7) Fluorescein sodium salt, (8) Rhodamine 110 chloride, (9) binder-free filters.

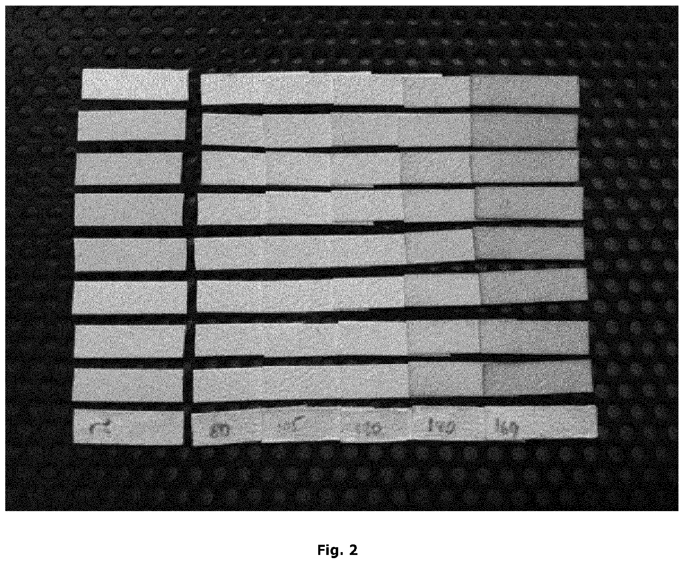

Fig. 2 shows glass microfiber filters loaded with binders, observed under daylight. Columns, from left to right: (1) room temperature (no heat treatment), (2) 80 °C/10 min, (3) 105 °C/10 min, (4) 120 °C/10 min, (5) 140 °C/10 min, (6) 160 °C/10 min. Rows, from top to bottom: (1) no dye added, (2) Rhodamine 101 inner salt, (3) Sulforhodamine B, (4) Rhodamine B, (5) Rhodamine 6G, (6) 2',7'-dichlorofluorescein, (7) Fluorescein sodium salt, (8) Rhodamine 110 chloride, (9) binder-free filters.

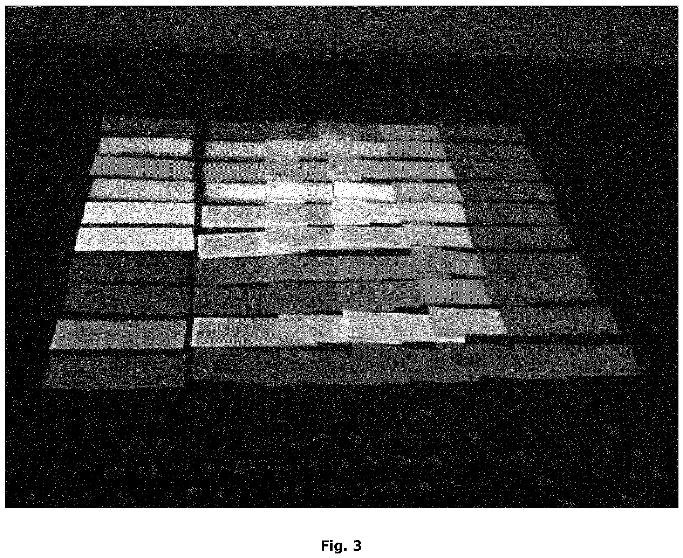

Fig. 3 shows glass microfiber filters loaded with binders, observed under 365 nm UV light. Columns, from left to right: (1) room temperature (no heat treatment), (2) 80 °C/10 min, (3) 105 °C/10 min, (4) 120 °C/10 min, (5) 140 °C/10 min, (6) 160 °C/10 min. Rows, from top to bottom: (1) no dye added, (2) Rhodamine B, (3) Sulforhodamine B, (4) Rhodamine 6G, (5) 2',7'-dichlorofluorescein, (6) Fluorescein sodium salt, (7) Eosin B, (8) Erythrosin, (9) Eosin Y disodium salt, (10) binder-free filters.

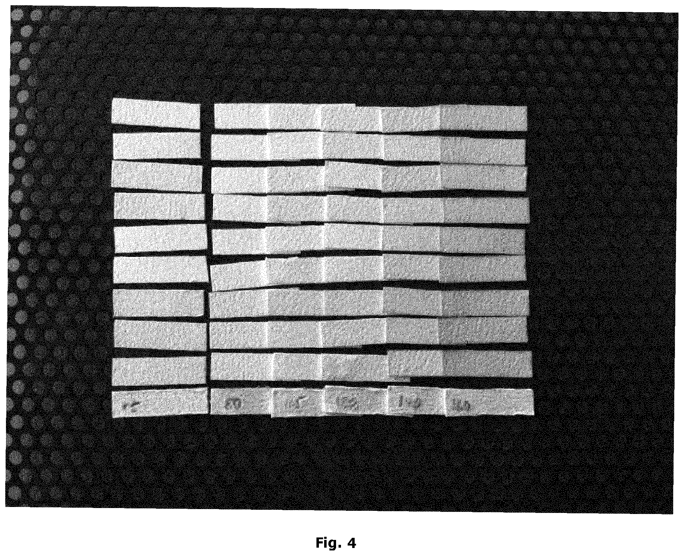

Fig. 4 shows glass microfiber filters loaded with binders, observed under daylight. Columns, from left to right: (1) room temperature (no heat treatment), (2) 80 °C/10 min, (3) 105 °C/10 min, (4) 120 °C/10 min, (5) 140 °C/10 min, (6) 160 °C/10 min. Rows, from top to bottom: (1) no dye added, (2) Rhodamine B, (3) Sulforhodamine B, (4) Rhodamine 6G, (5) 2',7'-dichlorofluorescein, (6) Fluorescein sodium salt, (7) Eosin B, (8) Erythrosin, (9) Eosin Y disodium salt, (10) binder-free filters.

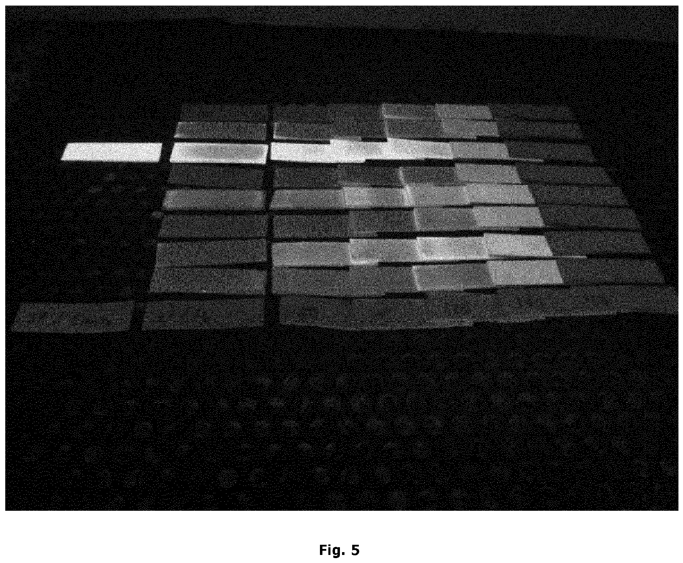

Fig. 5 shows glass microfiber filters loaded with binders, observed under 365 nm UV light. Columns, from left to right: (1) room temperature, 5 min (no heat treatment), (2) room temperature, 1 h (no heat treatment), (3) 80 °C/10 min, (4) 105 °C/10 min, (5) 120 °C/10 min, (6) 140 °C/10 min, (7) 160 °C/10 min. Rows, from top to bottom: (1) no dye added, (2) -, (3) Pyranine, (4) -, (5) Auramine O, (6) Acridine yellow G, (7) Acridine orange base, (8) Thiazole yellow G, (9) binder-free filters.

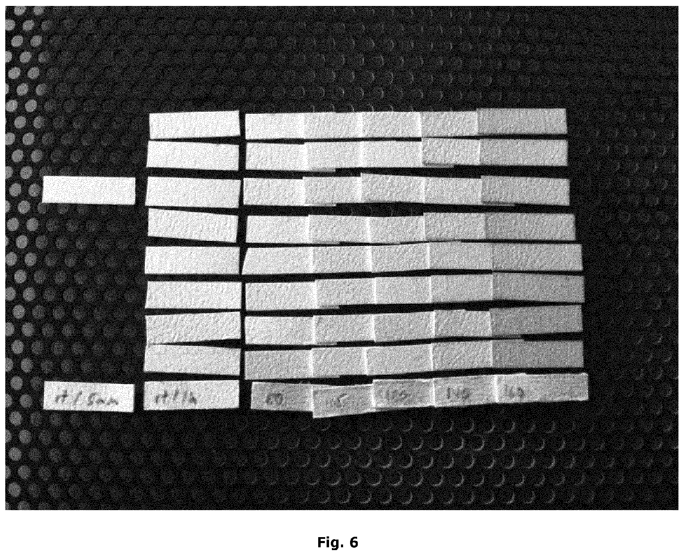

Fig. 6 shows glass microfiber filters loaded with binders, observed under daylight. Columns, from left to right: (1) room temperature/5 min (no heat treatment), (2) room temperature/1 h (no heat treatment), (3) 80 °C/10 min, (4) 105 °C/10 min, (5) 120 °C/10 min, (6) 140 °C/10 min, (7) 160 °C/10 min. Rows, from top to bottom: (1) no dye added, (2) -, (3) Pyranine, (4) -, (5) Auramine O, (6) Acridine yellow G, (7) Acridine orange base, (8) Thiazole yellow G, (9) binder-free filters.

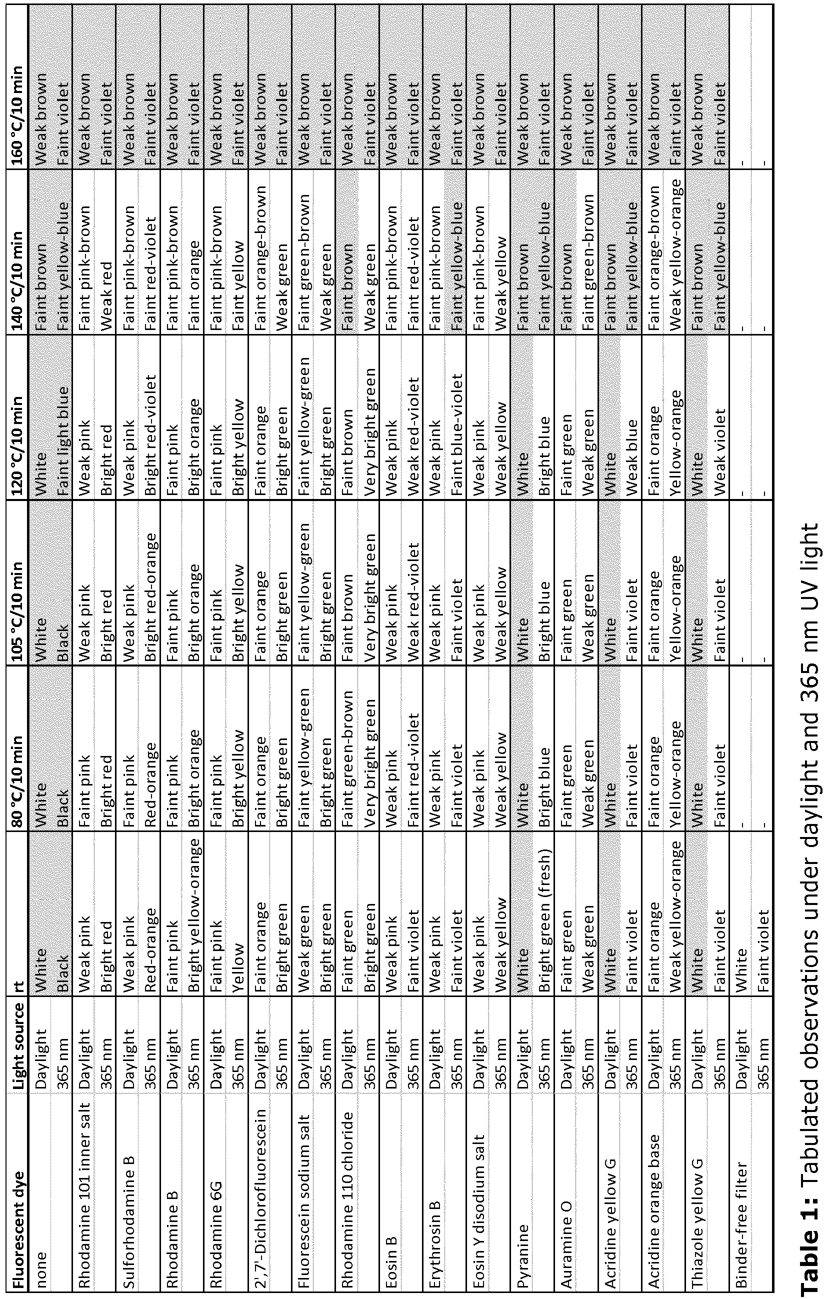

### Observations:

- The B1-urea-sugar binder itself is only very faintly fluorescent (thus denoted "black" in Table 1). However, a faint light blue fluorescence is observed when heated above 120 °C for 10 min. In daylight, a brown colorization is observed after 140 °C/10 min.
- All the binder mixtures containing fluorescent dyes distinguished themselves from the dye free binder by the presence of fluorescence under 365 nm UV light up until 140 °C/10 min where the signal from the fluorescent dye was weak at best. After 160 °C/10 min, only the background fluorescence from the binder itself is observed.
- Many of the binder mixtures containing fluorescent dyes likewise distinguished themselves from the dye free binder by the presence of different colors in daylight up until 140 °C/10 min. After 160 °C/10 min, only the background color from the binder itself is observed.
- Uneven distribution of uncured binder is clearly visible by variations in fluorescence emission in binder compositions containing fluorescent dyes.
- In general, 365 nm UV light gave better responses than 254 nm UV light.

### Example 2: Detection of uncured binder, glass microfiber filters, 1% dry weight B1-urea-sugar containing 0-0.4% fluorescein sodium salt

1% dry weight B1-urea-sugar binder containing 0, 0.05, 0.1, 0.2 and 0.4% fluorescein sodium salt (of binder dry matter) was produced as described in example 1.

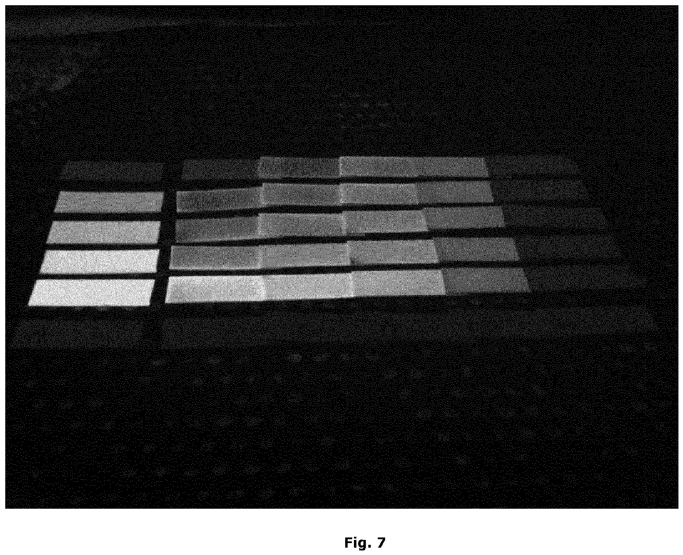

Glass microfiber filters loaded with these binders were then produced as described in example 1. The binder loaded glass microfiber filters were then treated at different temperatures and observed under daylight as well as under 365 nm UV light (see Figs. 7-8).
Fig. 7 shows glass microfiber filters loaded with binders, observed under 365 nm UV light. Columns, from left to right: (1) room temperature (no heat treatment), (2) 105 °C/10 min, (3) 120 °C/10 min, (4) 130 °C/10 min, (5) 140 °C/10 min, (6) 160 °C/10 min. Rows, from top to bottom: (1) 0% fluorescein sodium salt, (2) 0.05% fluorescein sodium salt, (3) 0.10% fluorescein sodium salt, (4) 0.20% fluorescein sodium salt, (5) 0.40% fluorescein sodium salt, (6) binder-free filters.

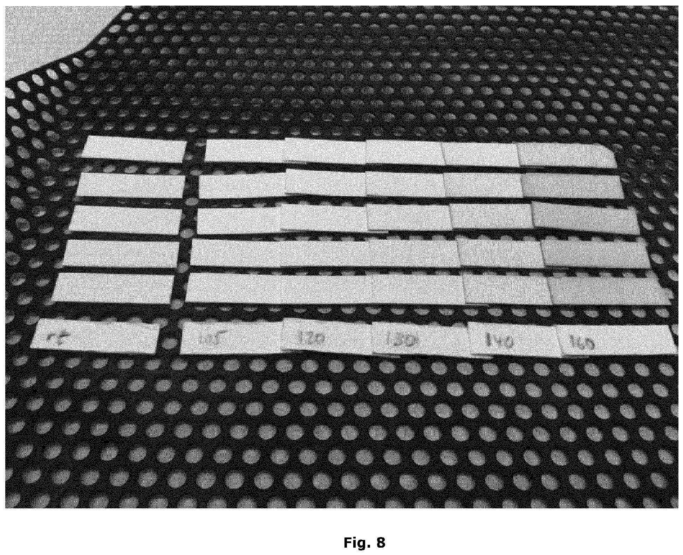

Fig. 8 shows Glass microfiber filters loaded with binders, observed under daylight. Columns, from left to right: (1) room temperature (no heat treatment), (2) 105 °C/10 min, (3) 120 °C/10 min, (4) 130 °C/10 min, (5) 140 °C/10 min, (6) 160 °C/10 min. Rows, from top to bottom: (1) 0% fluorescein sodium salt, (2) 0.05% fluorescein sodium salt, (3) 0.10% fluorescein sodium salt, (4) 0.20% fluorescein sodium salt, (5) 0.40% fluorescein sodium salt, (6) binder-free filters.

The resulting observations are listed in Table 2. Observations that do not deviate from the dye-free B1-urea-sugar binder have been colored in gray.

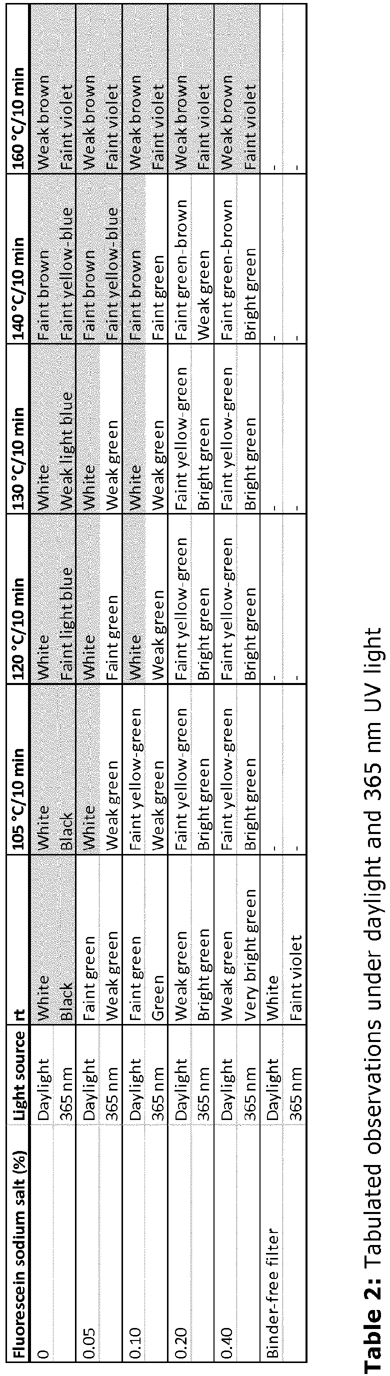

### Observations:

- Increasingly strong green fluorescence of the uncured binder with increasing fluorescein sodium salt content is observed for the concentration range 0.05-0.4% fluorescein sodium salt (of binder dry weight).
- An increasing - though faint - green coloration of the uncured binder under daylight is also observed with increasing fluorescein sodium salt concentration.
- After 160 °C/10 min, only the background fluorescence (under 365 nm UV light) and background color (under daylight) of the binder itself is observed.

### Example 3: Detection of uncured binder, glass fiber filters, 1% dry weight PUF-sugar containing 0-0.4% fluorescein sodium salt

1% dry weight PUF-sugar binder containing 0, 0.1 or 0.4% fluorescein sodium salt (of binder dry matter) was produced as described in example 1.

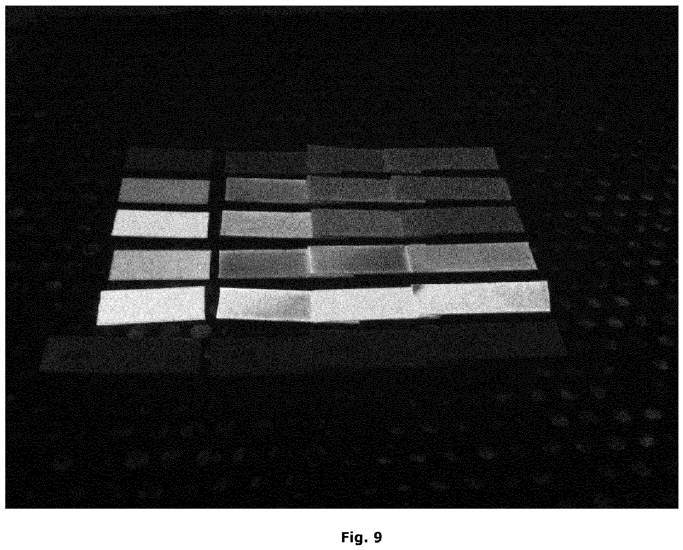

Glass microfiber filters loaded with these binders were then produced as described in example 1. The binder loaded glass microfiber filters were then treated at different temperatures and observed under daylight as well as under 365 nm UV light and compared to 1% dry weight B1-urea-sugar mixture with 0.1 or 0.4% fluorescein sodium salt (of binder dry matter) obtained as described in example 1 (see Figs. 9-10).
Fig. 9 shows glass microfiber filters loaded with binders, observed under 365 nm UV light. Columns, from left to right: (1) room temperature (no heat treatment), (2) 80 °C/10 min, (3) 105 °C/10 min, (4) 120 °C/10 min. Rows, from top to bottom: (1) PUF-sugar/0% fluorescein sodium salt, (2) PUF-sugar/0.10% fluorescein sodium salt, (3) PUF-sugar/0.40% fluorescein sodium salt, (4) B1-urea-sugar/0.10% fluorescein sodium salt, (5) B1-urea-sugar/0.40% fluorescein sodium salt, (6) binder-free filters.

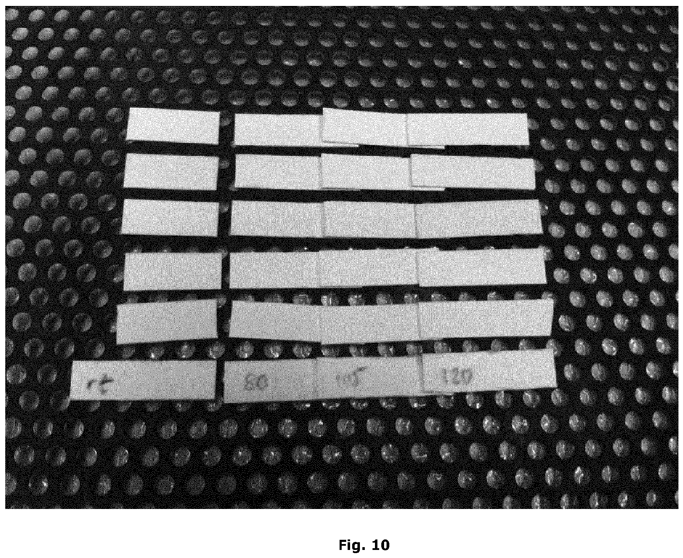

Fig. 10 shows glass microfiber filters loaded with binders, observed under daylight. Columns, from left to right: (1) room temperature (no heat treatment), (2) 80 °C/10 min, (3) 105 °C/10 min, (4) 120 °C/10 min. Rows, from top to bottom: (1) PUF-sugar/0% fluorescein sodium salt, (2) PUF-sugar/0.10% fluorescein sodium salt, (3) PUF-sugar/0.40% fluorescein sodium salt, (4) B1-urea-sugar/0.10% fluorescein sodium salt, (5) B1-urea-sugar/0.40% fluorescein sodium salt, (6) binder-free filters.

The resulting observations are listed in Table 3. Observations that do not deviate from the dye-free PUF-sugar binder have been colored in gray.

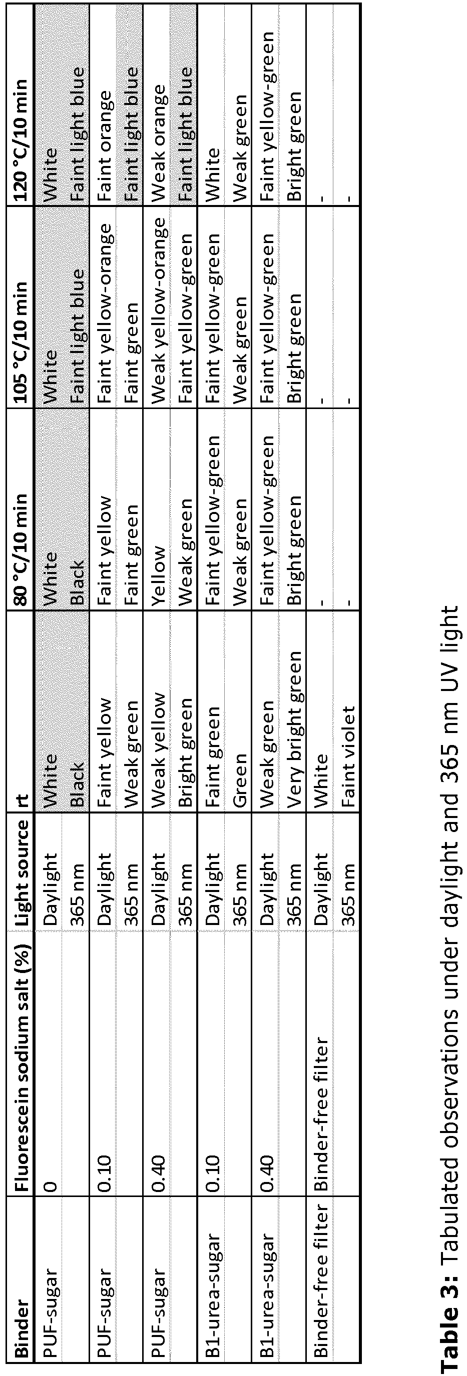

### Observations:

- The PUF-sugar binder itself is only very faintly fluorescent (thus denoted "black" in the Table). However, a faint light blue fluorescence is observed when heated above 105 °C for 10 min.
- The green fluorescence from fluorescein sodium salt is still easily detectable, however, it is less intensive in the PUF-sugar binder than in the B1-urea-sugar binder and only faint green or yellow-green fluorescence is observed after 105 °C/10 min. After 120 °C/10 min, only the background fluorescence from the PUF-sugar binder itself is observed.

### Example 4: Detection of chewing gum made from 19% dry weight B1-urea-sugar containing 0.4% fluorescein

### sodium salt

19% dry weight B1-urea-sugar binder containing 0.4% fluorescein sodium salt (of binder dry matter) was produced as described in example 1. A model chewing gum was then produced by soaking binder free stone wool fibers (0.69 g) in the binder solution for 10 seconds followed by drying by pressing between several layers of lab paper towel until a final weight of 1.90 g was obtained. The resulting binder loading corresponds to a binder dry weight on the cured stone wool fibers of 24.9%. The humid binder-containing stone wool fibers were then dried at 105 °C for 7 min, pressed together and finally heated at 200 °C for 7 minutes.

### Observations:

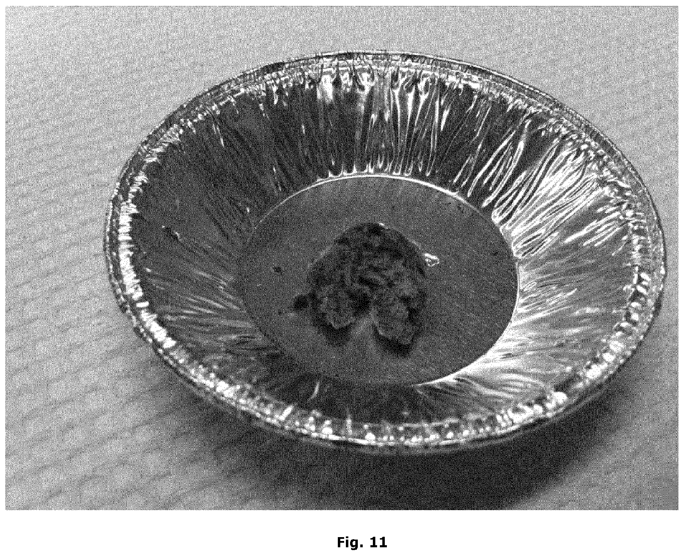

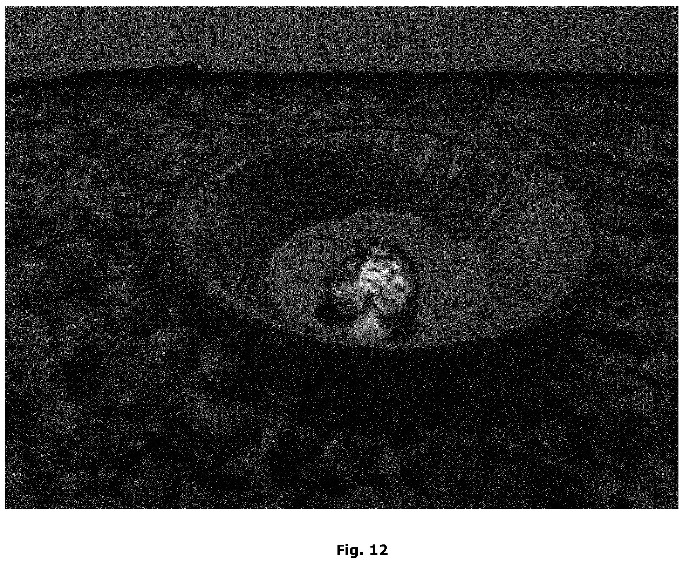

- The cured surface of the model chewing gum appeared dark brown and was non-fluorescent (Figures 11-12).
- When split open and observed under 365 nm UV light, the uncured center was fluorescent green (Figures 11-12).
   Fig. 11 shows model chewing gum with 25% dry weight B1-urea-sugar containing 0.4% fluorescein sodium salt, observed in daylight.
   Fig. 12 shows model chewing gum with 25% dry weight B1-urea-sugar containing 0.4% fluorescein sodium salt, observed under 365 nm UV light.

### Example 5: Detection of uncured binder and uncured binder distribution, low-density product

A low-density stone wool product (28 kg/m³, 3.0% ignition loss) was produced using the B1-urea-sugar binder containing 0.4% fluorescein sodium salt.

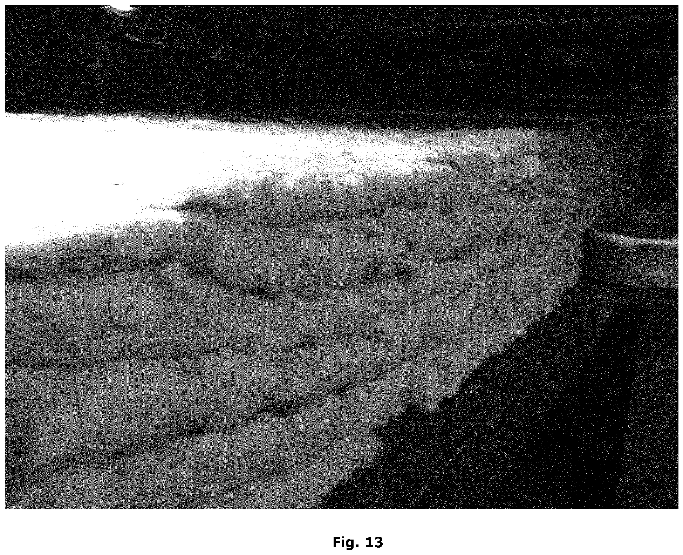

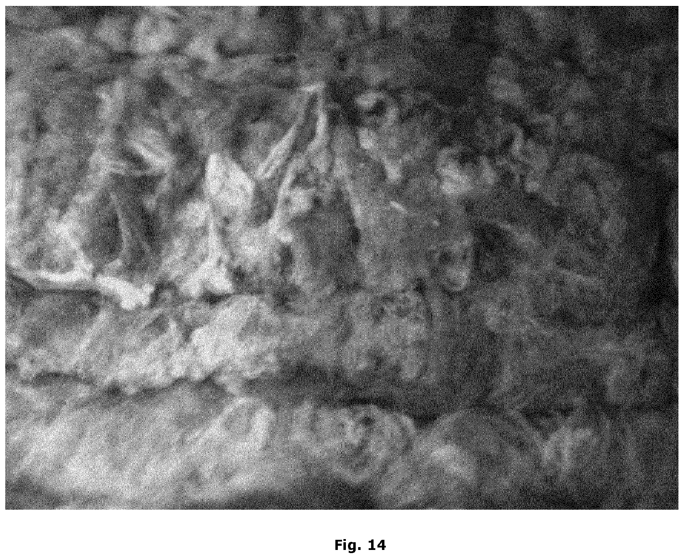

Observations on primary wool (just before curing oven):
- In daylight, the primary wool appeared faint yellow-greenish (Figure 13).
- Under 365 nm UV-light, the uncured binder fluoresced bright green - the variations in green fluorescence (from none to very bright) clearly visualized the binder distribution in the primary wool (Figure 14).
   Fig. 13 shows primary wool, observed under daylight.
   Fig. 14 shows primary wool, observed under 365 nm UV light.

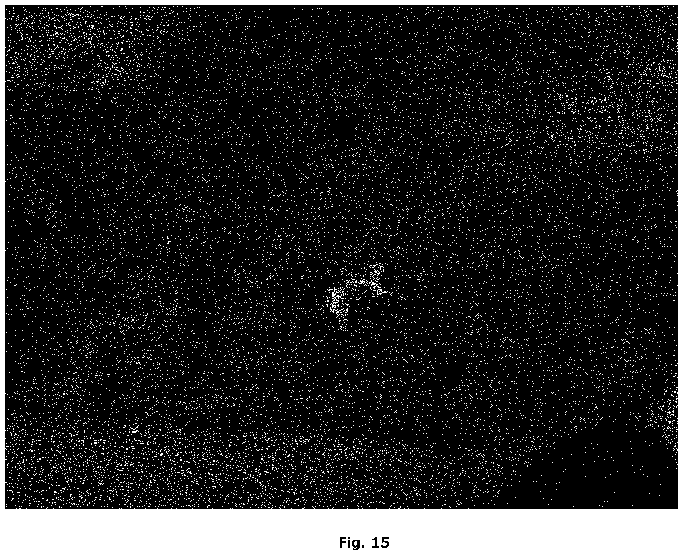

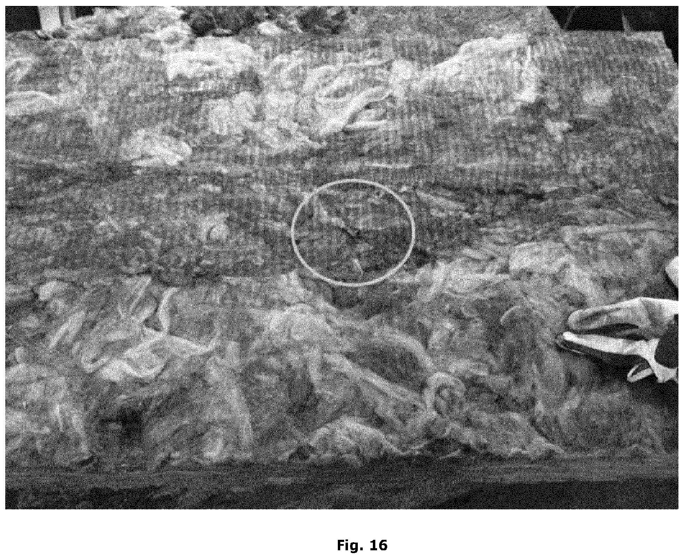

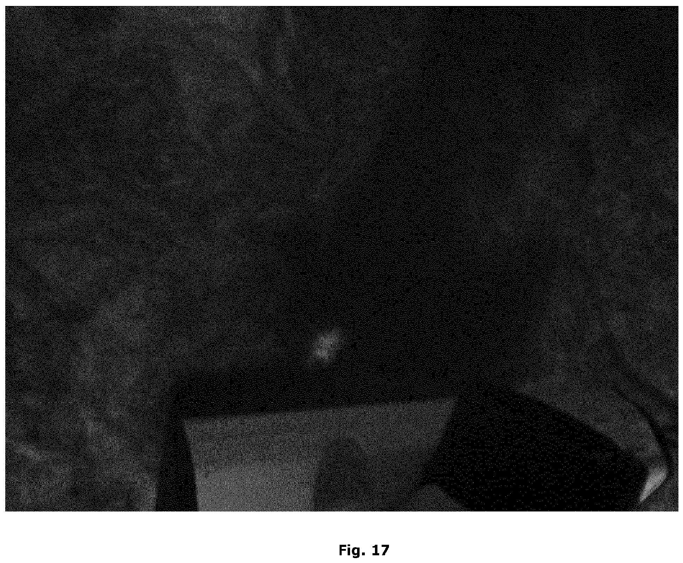

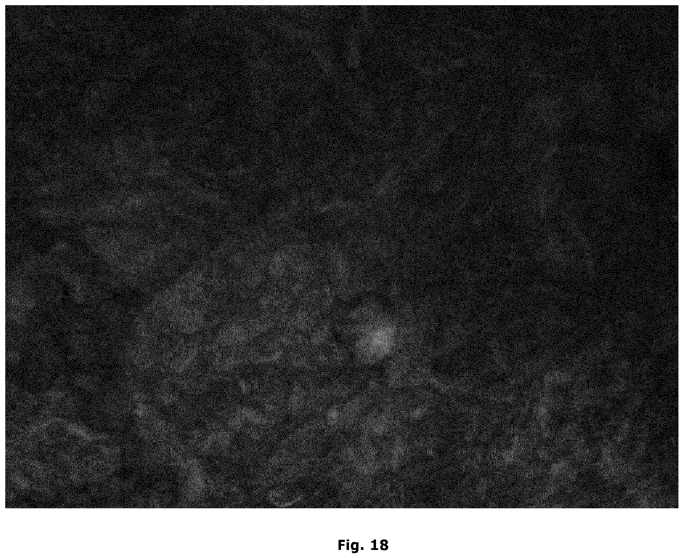

Observations on cured products (sampled after the curing oven):
- Well-cured areas (brownish) as well as binder free areas (white) appeared "as usual" in daylight and were non-fluorescent under 365 nm UV light.
- Areas with uncured binder were easily detected - and distinguished from binder free areas - under 365 nm UV light by the presence of green fluorescence: the presence of uncured binder as a result of for example chewing gums (Figures 15 and 16) and high-density wool lumps (Figures 17 and 18) were detected.
- Even small uncured spots not visible to the naked eye in daylight were efficiently detected under 365 nm UV light.
- Flaws within the cured products were detected by the presence of uncured, green fluorescent areas on the product surface.

Fig. 15 shows chewing gum detected by green fluorescence in cured low-density product, observed under 365 nm UV light.
Fig. 16 shows chewing gum detected in cured low-density product, observed in daylight.
Fig. 17 shows uncured binder above high density wool lump detected by green fluorescence in cured low-density product, observed under 365 nm UV light.
Fig. 18 shows uncured binder above high density wool lump detected in cured low-density product, observed in daylight.

### Example 6: Detection of uncured binder and uncured binder distribution, high-density product

A high-density stone wool product (150 kg/m³, 3.5% ignition loss) was produced using the B1-urea-sugar binder containing 0.2% fluorescein sodium salt.

Observations on primary wool (just before curing oven):
- In daylight, the primary wool appeared faint yellow-greenish.
- Under 365 nm UV-light, the uncured binder fluoresced bright green - the variations in green fluorescence (from none to very bright) clearly visualized the binder distribution in the primary wool.

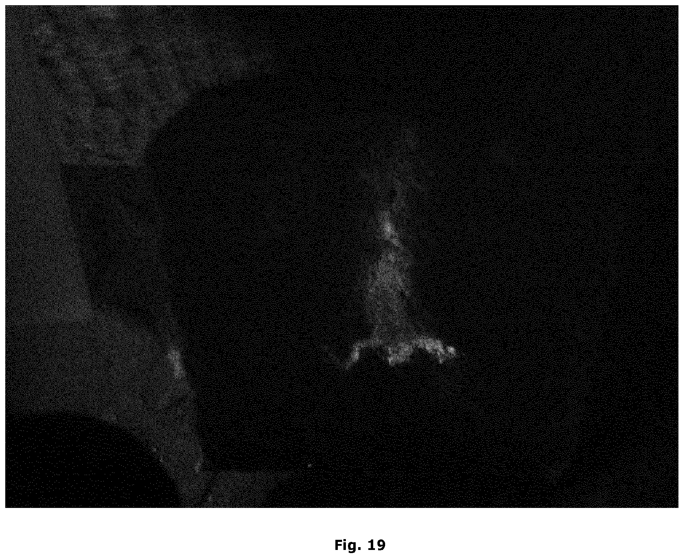

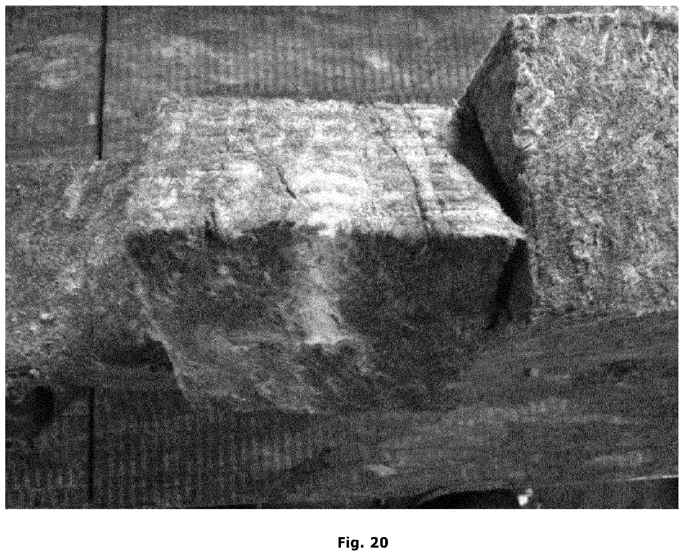

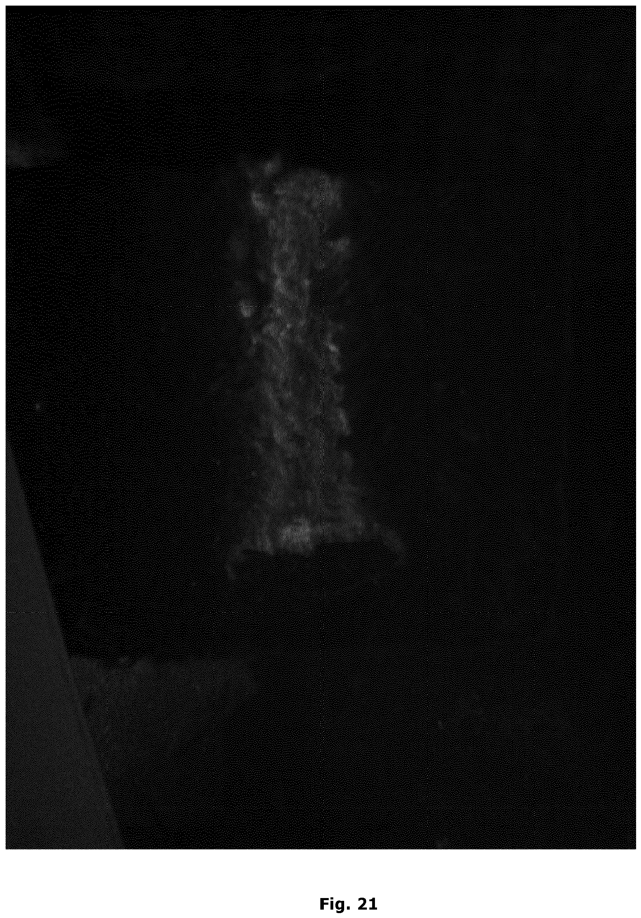

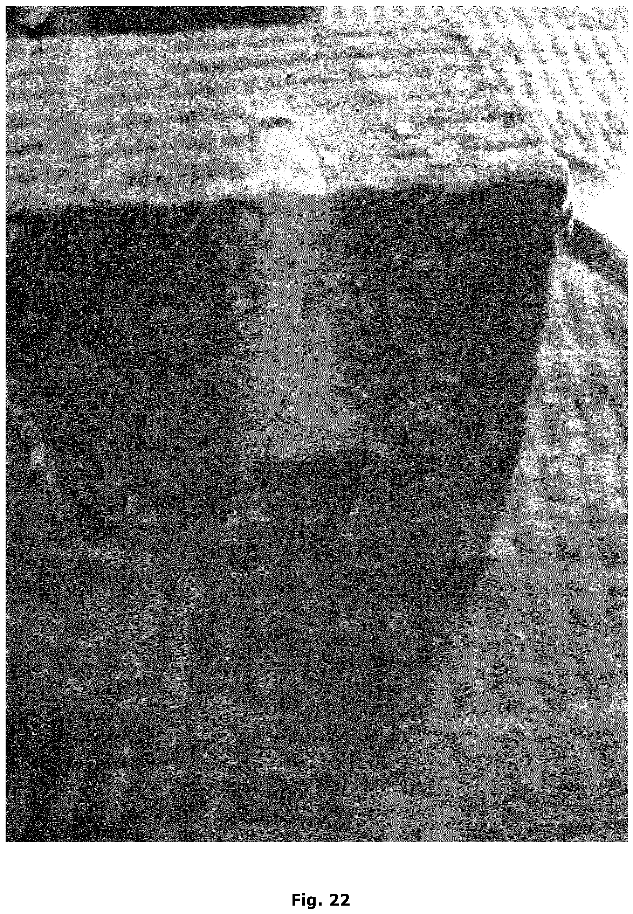

Observations on cured products (sampled after the curing oven):
- Well-cured areas (brownish) as well as binder free areas (white) appeared "as usual" in daylight and were non-fluorescent under 365 nm UV light.
- Areas with uncured binder were easily detected - and distinguished from binder free areas - under 365 nm UV light by the presence of green fluorescence: the presence of uncured binder as a result of for example chewing gums (Figures 19 and 20) and shot nests (Figures 21 and 22) were detected.
- Even small uncured spots not visible to the naked eye in daylight were efficiently detected under 365 nm UV light.
- Flaws within the cured products were detected by the presence of uncured, green fluorescent areas on the product surface.
   Fig. 19 shows chewing gum inside cured high-density product identified by detection of green fluorescence from uncured binder on product surface, observed under 365 nm UV light.
   Fig. 20 shows chewing gum inside cured high-density product identified by detection of uncured binder on product surface, observed in daylight.
   Fig. 21 shows a shot nest inside cured high-density product identified by detection of green fluorescence from uncured binder on product surface, observed under 365 nm UV light.
   Fig. 22 shows a shot nest inside cured high-density product identified by detection of uncured binder on product surface, observed in daylight.

### Example 7: Detection of uncured binder and uncured binder distribution, medium-density product

A medium-density stone wool product (87 kg/m3, 3.5% ignition loss) was produced using the B1-urea-sugar binder containing 0.2% Rhodamine B. This example is not according to the invention.

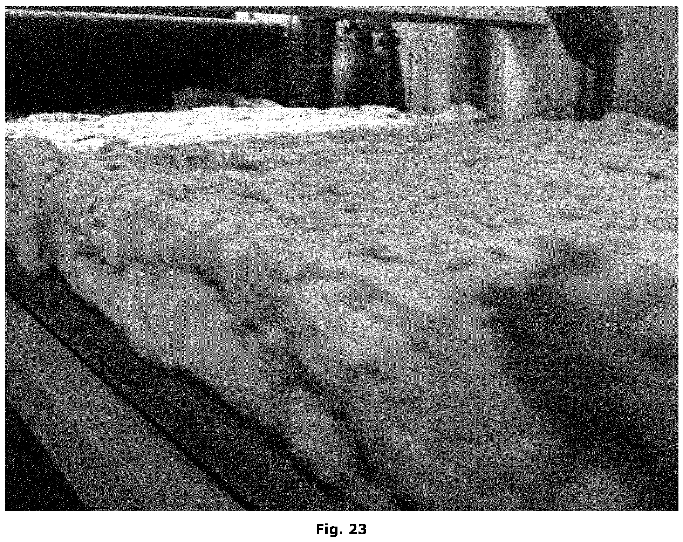

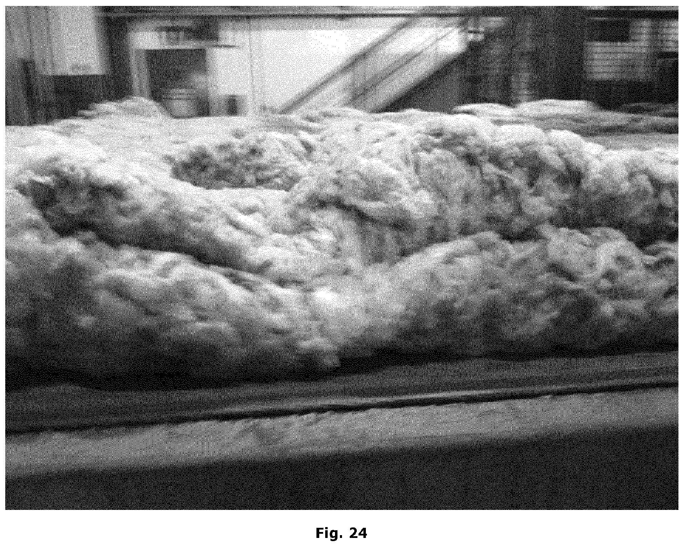

Observations on primary wool (just before curing oven):
- In daylight, uncured binder appeared pink - the variations in pink coloration (from none to bright) clearly visualized the binder distribution in the primary wool (Figure 23).
- Under 365 nm UV-light, the uncured binder fluoresced bright pink-orange - the variations in pink-orange fluorescence (from none to very bright) clearly visualized the binder distribution in the primary wool (Figure 24).
   Fig. 23 shows primary wool, observed under daylight.
   Fig. 24 shows primary wool, observed under 365 nm UV light.

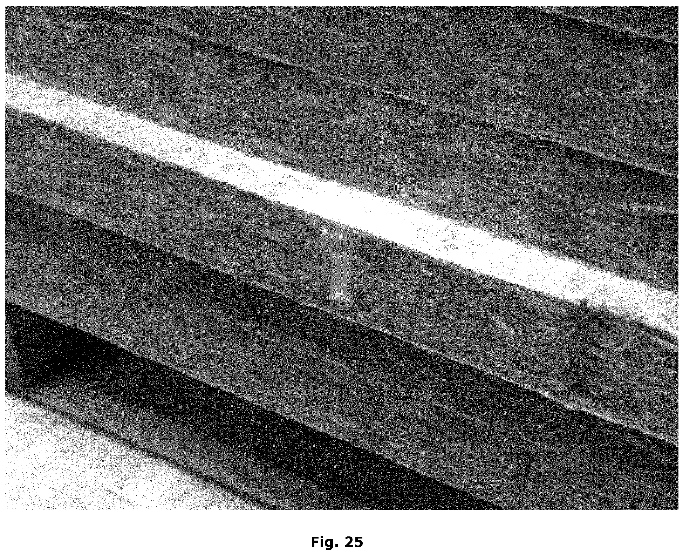

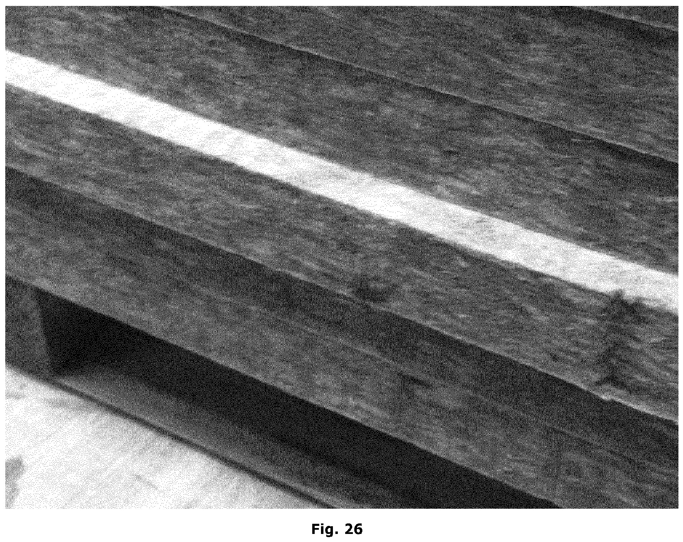

Observations on cured products (sampled after the curing oven):
- Well-cured areas (brownish) as well as binder free areas (white) appeared "as usual" in daylight and were non-fluorescent under 365 nm UV light.
- Areas with uncured binder were easily detected - and distinguished from binder free areas - under 365 nm UV light by the presence of pink-orange fluorescence and under daylight by the presence of pink coloration: the presence of uncured binder as a result of for example shot nests (Figures 25 and 26) were detected.
- Even small uncured spots not visible to the naked eye in daylight were efficiently detected under 365 nm UV light.
   Fig. 25 shows a shot nest inside cured medium-density product identified by detection of pink-orange fluorescence from uncured binder, observed under 365 nm UV light.
   Fig. 26 shows a shot nest inside cured medium-density product identified by detection of pink-colored uncured binder, observed in daylight.

### Example 8: Detection of uncured binder, ceiling tiles

A medium-density stone wool product (87 kg/m³, 3.5% ignition loss) was produced using the B1-urea-sugar binder containing 0.1% fluorescein sodium salt. The resulting cured stone wool product was split and cleaned on the production line whereupon uncured binder (for example chewing gums) was detected by green fluorescence under 365 nm UV light. The occurrences of uncured binder were marked and the split stone wool product was then made into ceiling tiles by e.g. painting the stone wool.

### Observations:

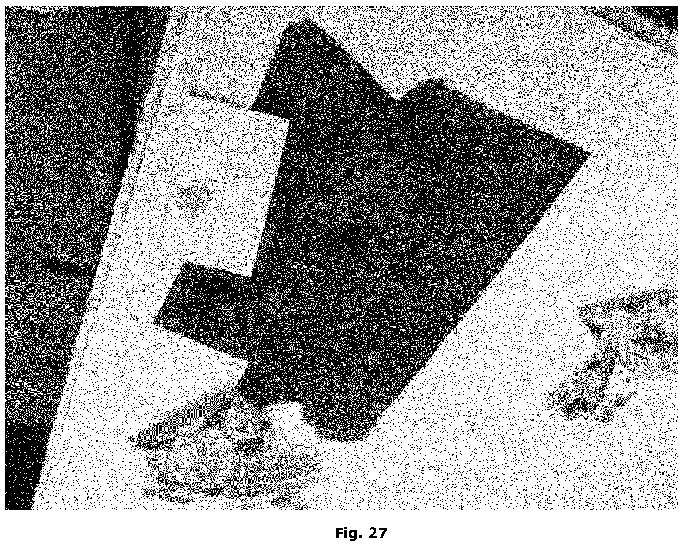

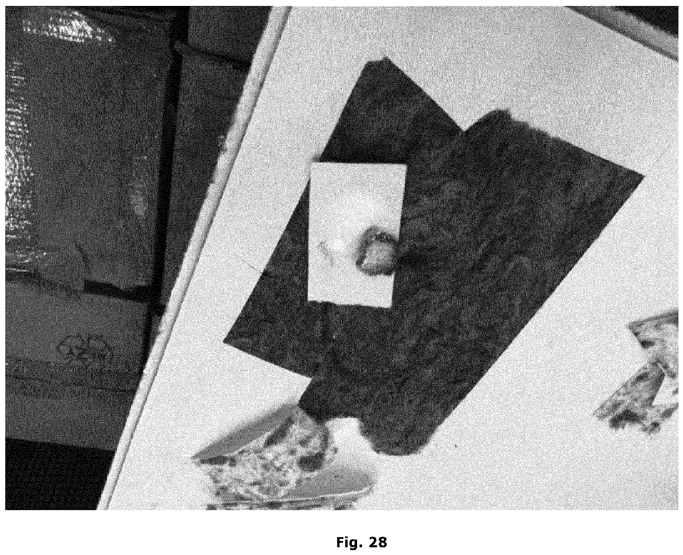

- An undesired brown spot originating from uncured binder was observed on the top fleece side of one of the finished tiles (Figure 27). The spot was green fluorescent under 365 nm UV light (Figure 28).
- When removing the top fleece, a chewing gum containing uncured binder was found directly underneath the brown spot. The chewing gum was hard to distinct from the rest of the wool in daylight (Figure 27) but was easily detected under 365 nm UV light by green fluorescence (Figure 28) and had thus been detected and marked before production of the finished ceiling tile.
   Fig. 27 shows an undesired brown spotoriginating from chewing gum containing uncured binder, observed in daylight.
   Fig. 28 shows an undesired brown spot originating from chewing gum containing uncured binder, observed under 365 nm UV light. Both the brown spot and the chewing gum are green fluorescent.

## Claims

1. An aqueous curable binder composition for use in the production of man-made vitreous fibres (MMVF) comprising one or more fluorescent dye(s) being non-fluorescent after curing of the binder,
wherein the binder composition comprises fluorescein sodium salt in a concentration of 0.05 to 0.4 wt.-%, based on the dry weight of the aqueous binder composition.

2. The aqueous binder composition according to any one of the preceding claims,
wherein the binder composition comprises a phenol-formaldehyde based resol and optionally a sugar component.

3. The aqueous binder composition according to claim 1, wherein the binder composition comprises (1) a water-soluble binder component obtainable by reacting at least one alkanolamine with at least one polycarboxylic acid or anhydride and, optionally, treating the reaction product with a base; (2) a sugar component; and optionally (3) urea.

4. The aqueous binder composition according to claim 1, wherein the aqueous binder composition comprises
(a) a sugar component, and one or both of
(b) a polycarboxylic acid component, and
(c) a component selected from the group of amine compounds, ammonia, ammonium salts of a polycarboxylic acids.

5. The aqueous binder composition according to any one of claims 2 to 4, wherein the sugar component is selected from sucrose, reducing sugars in particular dextrose, polycarbohydrates, and mixtures thereof.

6. An MMVF product made with the binder according to any one of claims 1-5.

7. Method for detecting the distribution of uncured binder on and/or in a MMVF web and/or a MMVF product, wherein the method comprises the steps:
(a) preparing a MMVF web by applying an aqueous binder composition according to any of the claims 1 to 5 to man-made vitreous fibres,
(b) curing the MMVF web to form a MMVF product
(c) a detection step including one or more of
- detecting the emission of fluorescence
- detecting the pattern of fluorescence
- detecting the absence of fluorescence
- detecting a color change
on one or more surfaces of the MMVF product after curing and/or
on one or more surfaces of the MMVF web before curing.

8. Method according to claim 7, wherein the detection step (c) takes place by visual inspection.

9. Method according to claim 7 or 8, wherein the detection step (c) takes place under illumination with a UV light.

10. Method according to any one of claims 7 to 9, wherein the detection step (c) is performed on one or more of the outer surfaces of the MMVF web and/or MMVF product.

11. Method according to any one of claims 7 to 10, wherein the detection step (c) is performed on one or more split surfaces of the MMVF product, the split surfaces resulting from cutting the MMVF web and/or MMVF product.

12. Method according to any of claims 7 to 11, wherein the method for detecting the distribution of uncured binder is a method for the detection of binder distribution anomalies in the mineral fibre product such as binder distribution anomalies being agglomeration of binder.

13. Method according to any one of claims 7 to 12, wherein the detection of the distribution of uncured binder is performed immediately after the curing and cooling of the binder in the mineral fibre product.

## Patentansprüche

1. Wässrige härtbare Bindemittelzusammensetzung zur Verwendung bei der Herstellung künstlicher glasartiger Fasern (MMVF), umfassend einen oder mehrere Fluoreszenzfarbstoffe, die nach dem Härten des Bindemittels nicht fluoreszierend sind,
wobei die Bindemittelzusammensetzung Fluorescein-Natriumsalz in einer Konzentration von 0,05 bis 0,4 Gew.-%, bezogen auf das Trockengewicht der wässrigen Bindemittelzusammensetzung, umfasst.

2. Wässrige Bindemittelzusammensetzung nach irgendeinem der vorhergehenden Ansprüche, wobei die Bindemittelzusammensetzung ein Phenol-Formaldehydbasiertes Resol und gegebenenfalls eine Zuckerkomponente umfasst.

3. Wässrige Bindemittelzusammensetzung nach Anspruch 1, wobei die Bindemittelzusammensetzung (1) eine wasserlösliche Bindemittelkomponente, die durch Umsetzen mindestens eines Alkanolamins mit mindestens einer(m) Polycarbonsäure oder -anhydrid und gegebenenfalls Behandeln des Reaktionsprodukts mit einer Base erhältlich ist; (2) eine Zuckerkomponente; und gegebenenfalls (3) Harnstoff umfasst.

4. Wässrige Bindemittelzusammensetzung nach Anspruch 1, wobei die wässrige Bindemittelzusammensetzung
(a) eine Zuckerkomponente und eine oder beide von
(b) einer Polycarbonsäure-Komponente und
(c) einer Komponente ausgewählt aus der Gruppe von Aminverbindungen, Ammoniak, Ammoniumsalzen von einer Polycarbonsäure
umfasst.

5. Wässrige Bindemittelzusammensetzung nach irgendeinem der Ansprüche 2 bis 4, wobei die Zuckerkomponente ausgewählt ist aus Sucrose, reduzierenden Zuckern, insbesondere Dextrose, Polykohlehydraten und Mischungen davon.

6. MMVF-Produkt, hergestellt mit dem Bindemittel nach irgendeinem der Ansprüche 1-5.

7. Verfahren zum Detektieren der Verteilung von ungehärtetem Bindemittel auf und/oder in einer MMVF-Bahn und/oder einem MMVF-Produkt, wobei das Verfahren die folgenden Schritte umfasst:
(a) Herstellen einer MMVF-Bahn durch Aufbringen einer wässrigen Bindemittelzusammensetzung nach irgendeinem der Ansprüche 1 bis 5 auf künstliche glasartige Fasern,
(b) Härten der MMVF-Bahn zur Bildung eines MMVF-Produkts;
(c) einen Detektionsschritt, der umfasst eines oder mehreres von
- Detektieren der Fluoreszenzemission
- Detektieren des Fluoreszenzmusters
- Detektieren der Abwesenheit von Fluoreszenz
- Detektieren einer Farbänderung
auf einer oder mehreren Oberflächen des MMVF-Produkts nach dem Härten
und/oder auf einer oder mehreren Oberflächen der MMVF-Bahn vor dem Härten.

8. Verfahren nach Anspruch 7, wobei der Detektionsschritt (c) durch visuelle Inspektion erfolgt.

9. Verfahren nach Anspruch 7 oder 8, wobei der Detektionsschritt (c) unter Beleuchtung mit einem UV-Licht erfolgt.

10. Verfahren nach irgendeinem der Ansprüche 7 bis 9, wobei der Detektionsschritt (c) an einer oder mehreren der äußeren Oberflächen der MMVF-Bahn und/oder des MMVF-Produkts durchgeführt wird.

11. Verfahren nach irgendeinem der Ansprüche 7 bis 10, wobei der Detektionsschritt (c) an einer oder mehreren getrennten Oberflächen des MMVF-Produkts durchgeführt wird, wobei getrennte Oberflächen aus dem Schneiden der MMVF-Bahn und/oder des MMVF-Produkts resultieren.

12. Verfahren nach irgendeinem der Ansprüche 7 bis 11, wobei das Verfahren zum Detektieren der Verteilung von ungehärtetem Bindemittel ein Verfahren zum Detektieren von Bindemittelverteilungsanomalien in dem Mineralfaserprodukt, wie Bindemittelverteilungsanomalien, die Agglomeration von Bindemittel sind, ist.

13. Verfahren nach irgendeinem der Ansprüche 7 bis 12, wobei die Detektion der Verteilung des ungehärteten Bindemittels unmittelbar nach dem Härten und Kühlen des Bindemittels in dem Mineralfaserprodukt durchgeführt wird.

## Revendications

1. Composition aqueuse de liant durcissable destinée à être utilisée dans la production de fibres vitreuses synthétiques (MMVF) comprenant un ou plusieurs colorants fluorescents qui ne sont plus fluorescents après durcissement du liant,
la composition de liant comprenant un sel sodique de fluorescéine à une concentration de 0,05 à 0,4 % en poids, sur la base du poids sec de la composition aqueuse de liant.

2. Composition aqueuse de liant selon l'une quelconque des revendications précédentes, la composition de liant comprenant un résol à base de phénol-formaldéhyde et éventuellement un composant sucre.

3. Composition aqueuse de liant selon la revendication 1, la composition de liant comprenant (1) un composant liant hydrosoluble pouvant être obtenu par réaction d'au moins une alcanolamine avec au moins un acide polycarboxylique ou un anhydride et, éventuellement, le traitement du produit de la réaction avec une base ; (2) un composant sucre ; et éventuellement (3) une urée.

4. Composition aqueuse de liant selon la revendication 1, la composition aqueuse de liant comprenant
(a) un composant sucre, et un ou les deux parmi
(b) un composant acide polycarboxylique, et
(c) un composant choisi dans le groupe des composés d'amine, de l'ammoniac, des sels d'ammonium d'un acide polycarboxylique.

5. Composition aqueuse de liant selon l'une quelconque des revendications 2 à 4, dans laquelle le composant sucre est choisi parmi le saccharose, les sucres réducteurs en particulier le dextrose, les polyglucides, et leurs mélanges.

6. Produit MMVF fabriqué à l'aide du liant selon l'une quelconque des revendications 1 à 5.

7. Procédé de détection de la distribution du liant non durci sur et/ou dans un tissu MMFV et/ou un produit MMVF, le procédé comprenant les étapes suivantes :
(a) la préparation d'un tissu MMVF par application d'une composition aqueuse de liant selon l'une quelconque des revendications 1 à 5 à des fibres vitreuses synthétiques,
(b) le durcissement du tissu MMVF pour former un produit MMVF
(c) une étape de détection comprenant une ou plusieurs des opérations suivantes
- détection de l'émission de fluorescence
- détection du motif de fluorescence
- détection de l'absence de fluorescence
- détection d'un changement de couleur
sur une ou plusieurs surfaces du produit MMVF après durcissement et/ou
sur une ou plusieurs surfaces du tissu MMVF avant durcissement.

8. Procédé selon la revendication 7, dans lequel l'étape de détection (c) s'effectue par inspection visuelle.

9. Procédé selon la revendication 7 ou 8, dans lequel l'étape de détection (c) s'effectue sous éclairage d'une lampe UV.

10. Procédé selon l'une quelconque des revendications 7 à 9, dans lequel l'étape de détection (c) s'effectue sur une ou plusieurs des surfaces externes du tissu MMFV et/ou du produit MMFV.

11. Procédé selon l'une quelconque des revendications 7 à 10, dans lequel l'étape de détection (c) s'effectue sur une ou plusieurs surfaces fendues du produit MMFV, les surfaces fendues résultant de la refente du tissu MMFV et/ou du produit MMFV.

12. Procédé selon l'une quelconque des revendications 7 à 11, le procédé de détection de la distribution du liant non durci étant un procédé de détection des anomalies de distribution de liant dans le produit de fibre minérale, lesdites anomalies de distribution de liant étant par exemple l'agglomération du liant.

13. Procédé selon l'une quelconque des revendications 7 à 12, dans lequel la détection de la distribution du liant non durci s'effectue immédiatement après le durcissement et le refroidissement du liant dans le produit de fibre minérale.
